# EUROPEAN PATENT SPECIFICATION

(11) **EP 2 648 296 B1**
(45) Date of publication and mention of the grant of the patent: **06.11.2019**
(21) Application number: 13003217.0
(22) Date of filing: 29.09.2006
(51) Int. Cl.: H02G 3/18, H02G 3/08, H02G 3/10

(54) **Modular electrical device for switches, sockets and other electrical components to be applied to a wall.**
Modulare elektrische Vorrichtung für Schalter, Steckdosen oder andere elektrische Komponenten zum Befestigen an einer Wand
Dispositif électrique modulaire pour interrupteurs, prises de courant et autres composants électriques devant être appliqués à un mur

(43) Date of publication of application: 09.10.2013
(62) Divisional of application: 06821717.3
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A1- 0 989 648
- DE-A1- 19 716 906
- FR-A- 2 856 202
- US-A- 5 667 059

## Description

The present invention relates to a modular electrical device for switches, sockets and other electrical components to be applied to a wall.

It is known that the electrical system of a building includes multiple boxes mounted on the walls and wherein various electrical components, such as sockets, switches, and other components having various functions are arranged.

The boxes are normally provided with a supporting frame and the electrical components are fixed to the frame by screws.

The boxes are first mounted on the wall, with the electric wires protruding from them, and then the electrician connects the electrical components to the wires and fixes the components to the boxes by means of the frame.

Fixing the components to the frame by means of screws is time consuming.

Devices are known wherein the components are fixed to the frame without screws, but they do not always ensure stable and reliable fixing and a component, for example a socket, can detach from the frame when one attempts to remove a plug from such socket.

EP0989648 discloses a system for securing electrical apparatuses in a supporting frame, comprising tongues engaging respective seats for sliding the apparatuses in the frame, from either the front or the rear of the frame.

FR2856202 discloses another system for fastening electrical components to a frame by means of sliding engagement means.

The aim of the present invention is to provide a device which overcomes the drawbacks of the cited prior art.

An object of the invention is to provide a device which allows simple and easy connection of components to the frame.

A further object of the invention is to provide a device which allows stable and reliable fixing of the components to the frame.

A further object is to provide a device which allows to separate easily the components of the frame if one wishes to act on the device for maintenance or to change the electrical components.

An important object of the present invention is to provide a device which is constituted by a limited number of parts and can be manufactured for example by injection molding and with other methods and materials normally used in this field.

This aim and these and other objects, which will become better apparent hereinafter, are achieved by a modular electrical device, for switches, sockets and other electrical components to be applied to a wall, as claimed in the appended claims.

Further characteristics and advantages will become better apparent from the description of preferred but not exclusive embodiments of the invention, illustrated by way of non-limiting example in the accompanying drawings, wherein:

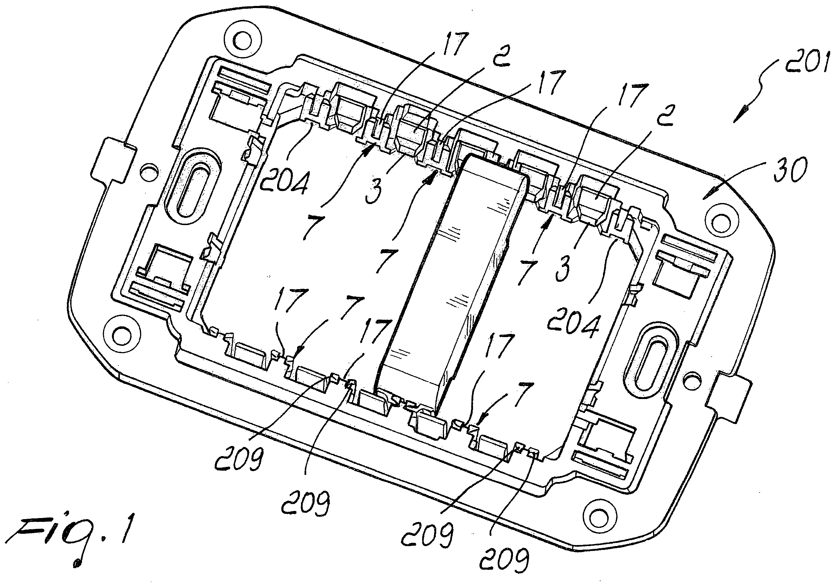

Figure 1 is a perspective view of a device according to the invention;
Figure 2 is a front view of the device of Figure 1;
Figure 3 is a sectional side view of the device of Figure 2;
Figure 4 is a perspective view of an electrical component of the device of Figure 3.

With reference to the figures, the device according to the invention, generally designated by the reference numeral 201, has a frame 30 provided with multiple engagement members that engage a respective grip member provided on an electrical component 206 to be associated with the frame 30.

Each engagement member has a flexible member 2, which is provided with a tooth 3.

The flexible member 2 is delimited laterally by two guiding members 7 that guide the electrical component 206 during insertion in the frame 30, so as to facilitate its installation.

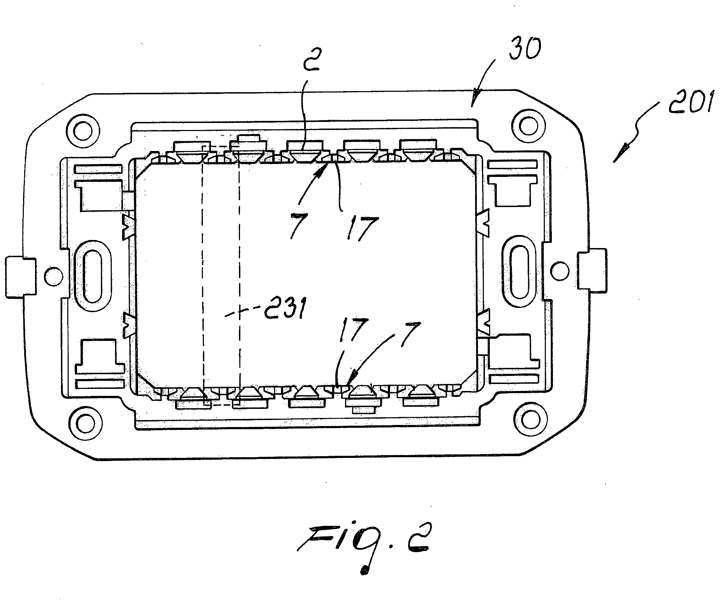

The assembly constituted by the flexible member 2 and the guiding members 7 constitutes a component insertion cell, which is designated by the reference numeral 231 and shown in broken lines in Figure 2.

The frame 30 is constituted by a support which is fixed to a box or backplate by means of fasteners such as, for example, screws.

Each of the guiding members 7 of the frame 30 has a groove 17.

The grooves 17 guide an electrical component 206 during insertion in the frame so as to considerably facilitate its installation.

A recess 204, provided below each guiding member 7, accommodates a tooth 205 of a flexible engagement member 207 provided on opposite walls 208 of the electrical component 206.

The guiding members 7 receive flexible engagement members 207 provided on opposite walls 208 of the electrical component 206.

The guiding members 7 allow easy insertion and sliding of the flexible engagement member 207 through the groove 17 and along the external profiles 209.

Inverted dovetail members 210 are also provided on the opposite walls 208 of the electrical component 206 and are inserted in, and slide along, the outer profiles 209 of the frame 30.

The opposite guiding members 7 provided on the transverse sides 9 of the frame 30 constitute a component insertion cell 231.

The cells 231 are arranged along the transverse sides 9 of the frame 30 at such a distance as to allow the movement/insertion of the electrical component 206 in steps of half of module.

It is thus possible to insert a wide variety of electrical components in the frame. The number of components that can be inserted are multiples of the basic dimension, which is equal to half a module.

The electrical components 206 are inserted in the frame 30 from the front, and it is therefore possible to fix the frame 30 to the box (not shown in the figures), to connect the electrical components 206 to the power supply/distribution wires, and finally to insert the electrical components 206 in the frame 30.

Installation is therefore easy and simplified.

The electrical components 206 can be removed from the frame 30 from the front. Removal can occur by using a tool (for example a screwdriver) which allows, by acting from the rear part of the frame 30, to apply a slight pressure to the flexible engagement member 207 of the electrical component.

The possibility of removing the electrical components 6 from the front, for example for replacement or maintenance, has the unquestionable advantage of avoiding the removal of the frame 30 from the box and also of preventing any indirect action on the electrical components 206 that are not involved.

The flexible engagement member 207 is provided with a tooth 205 at its free end and with a protruding member 213 arranged between the inverted dovetail engagement members 210.

The insertion of the electrical component 206 in the frame 30 is guided by the cooperation between the inverted dovetail engagement members 210 and the member 207, through the protruding member 213, for flexible engagement with the guiding members 7 of the frame 30.

The insertion of the electrical component 206 ends when the tooth 205 of the flexible engagement member 207 engages the hollow 204 provided in the guiding member 7 of the frame 30 (an operation which can be detected by means of a "click" sound), and the protruding member 213 of the electrical component 206 abuts on the final rear part of the groove 17 of the guiding member 7.

Such an insertion prevents unwanted movements and/or separations of the electrical component 206 from the frame 30 following the application of axial and non-axial traction and/or compression forces (for example, the insertion and extraction of a plug).

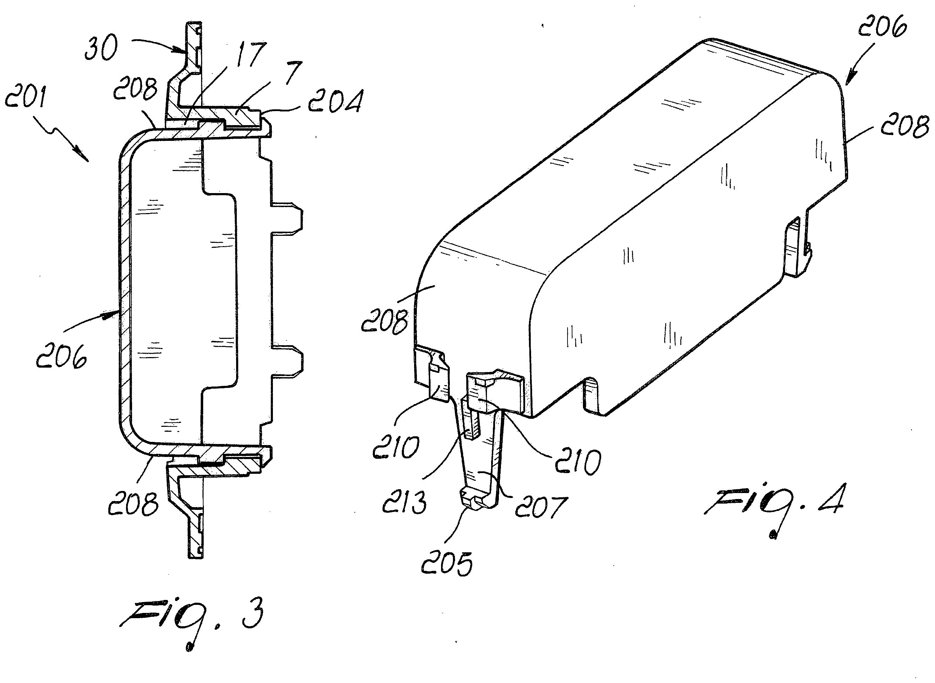

A force applied to the electrical component 206 in such a direction as to push it toward the inside of the frame 30, i.e., a compression, is contrasted by the protruding member 213 of the electrical component 206 abutting on the final rear part 214 of the groove 17 of the guiding member 7 of the frame 30, as visible in figure 3.

The force applied to the electrical component 206 in such a direction as to pull it toward the outside of the frame, i.e., traction, is contrasted by the tooth 205 of the flexible engagement member 207 abutting within the recess 204 formed in the rear part of the guiding member 7 of the frame 30.

Such an insertion allows to relieve the transverse sides 9 of the frame 30 of the forces applied by the electrical components 206 following their installation. These forces are in fact discharged onto the guiding members 7 of the frame, accordingly avoiding the deformation of the structure of the frame.

The invention achieves the intended aim and objects.

## Claims

1. A modular electrical device for switches, sockets and other electrical components to be applied to a wall, comprising a frame (30) and one or more electrical components (206) that can be fixed to the frame (30); said frame (30) having engagement means (2, 3, 7), each of said engagement means (2, 3, 7) engaging a grip member (207, 210) provided on an electrical component (206) to be associated with said frame (30); said engagement means (2, 3, 7) comprising a lock means (3, 17) for locking the axial movement of said electrical component (206) with respect to said frame (30), said grip members (207, 210) comprising an axial guiding means (207) that guides said electrical component (206) to slide with respect to said frame (30), guiding means comprising dovetail members (210) provided on opposite walls of said electrical component (206), said dovetail members (210) being inserted and sliding along external profiles (209) of said frame (30); said device being **characterized in that** said lock means comprise a groove (17) which is formed within each of guiding members (7) of said frame (30) and a recess (204) which is arranged below each guiding member (7) and accommodates a tooth (205) of a flexible engagement member (207) provided on opposite walls (208) of said electric component (206); said lock means further comprising a protruding member (213), which is formed on said electrical component (206) at said flexible engagement member (207) on the same axis as said tooth (205), said protruding member (213) abutting against a final rear part of said groove (17) of said guiding member (7), said tooth (205) abutting inside said recess (204).

2. The device according to claim 1, **characterized in that**, said lock means (205, 207) is engageable by snap action by making said electrical component (206) slide with respect to said frame (30), said lock means being disengageable by acting on said flexible engagement member (207).

## Patentansprüche

1. Eine modulare elektrische Vorrichtung für Schalter, Steckdosen und andere elektrische Komponenten zum Befestigen an einer Wand; einen Rahmen (30) und eine oder mehrere elektrische Komponenten (206) umfassend, die an dem Rahmen (30) befestigt werden können; wobei der Rahmen (30) Eingriffsmittel (2, 3, 7) hat, wobei jedes der Eingriffsmittel (2, 3, 7) in Eingriff mit einem Griffglied (207, 210) steht, das an einer elektrischen Komponente (206) angebracht ist, die mit dem Rahmen (30) verbunden werden soll; wobei die Eingriffsmittel (2, 3, 7) ein Blockiermittel (3, 17) zum Blockieren der axialen Bewegung der elektrischen Komponente (206) im Verhältnis zu dem Rahmen (30) umfassen, wobei die Griffglieder (207, 210) ein axiales Führungsmittel (207) umfassen, das die elektrische Komponente (206) zum Gleiten im Verhältnis zu dem Rahmen (30) führt; wobei das Führungsmittel Schwalbenschwanzglieder (210) umfasst, die an gegenüberliegenden Wänden der elektrischen Komponente (206) angebracht sind, wobei die Schwalbenschwanzglieder (210) entlang Außenprofilen (209) des Rahmens (30) eingesetzt werden und gleiten; wobei die Vorrichtung **dadurch gekennzeichnet ist, dass** die Blockiermittel eine Nut (17) umfassen, die in jedem der Führungsmittel (7) des Rahmens (30) geformt ist, und eine Einkerbung (204), die unterhalb jedes Führungsglieds (7) angeordnet ist und einen Zahn (205) eines biegsamen Eingriffsglieds (207) aufnimmt, angebracht an gegenüberliegenden Wänden (208) der elektrischen Komponente (206); wobei die Blockiermittel weiter ein vorstehendes Glied (213) umfassen, das an der elektrischen Komponente (206), an dem biegsamen Eingriffsglied (207), auf derselben Achse geformt ist wie der Zahn (205); wobei das vorstehende Glied (213) an einen abschließenden hinteren Teil der Nut (17) des Führungsglieds (7) anstößt, wobei der Zahn (205) innen an die Einkerbung (204) anstößt.

2. Die Vorrichtung gemäß Anspruch 1, **dadurch gekennzeichnet, dass** das Blockiermittel (205, 207) durch Schnappwirkung in Eingriff gebracht werden kann, indem die elektrische Komponente (206) im Verhältnis zu dem Rahmen (30) zum Gleiten gebracht wird, wobei das Blockiermittel durch Einwirken auf das biegsame Eingriffsglied (207) lösbar ist.

## Revendications

1. Dispositif électrique modulaire pour interrupteurs, prises de courant et autres composants électriques à appliquer sur un mur, comprenant un cadre (30) et un ou davantage de composants électriques (206) qui peuvent être fixés sur le cadre (30); ledit cadre (30) ayant des moyens de mise en prise (2, 3, 7), chacun desdits moyens de mise en prise (2, 3, 7) se mettant en prise avec un élément de serrage (207, 210) fourni sur un composant électrique (206) à associer audit cadre (30); lesdits moyens de mise en prise (2, 3, 7) comprenant un moyen de blocage (3, 17) pour bloquer le mouvement axial dudit composant électrique (206) par rapport audit cadre (30), lesdits éléments de serrage (207, 210) comprenant un moyen de guidage axial (207) qui guide ledit composant électrique (206) pour glisser par rapport audit cadre (30), ledit moyen de guidage comprenant des éléments en queue d'aronde (210) fournis sur des parois opposées dudit composant électrique (206), lesdits éléments en queue d'aronde (210) étant insérés dans des profilés externes (209), et glissant le long de ceux-ci, dudit cadre (30); ledit dispositif **se caractérisant en ce que** ledit moyen de blocage comprend une rainure (17) qui est formée dans chacun des éléments de guidage (7) dudit cadre (30) et un creux (204) qui est disposé sous chaque élément de guidage (7) et héberge une dent (205) d'un élément de mise en prise flexible (207) fourni sur des parois opposées (208) dudit composant électrique (206) ; ledit moyen de blocage comprenant en outre un élément saillant (213) formé sur ledit composant électrique (206) au niveau dudit élément de mise en prise flexible (207) sur le même axe que ladite dent (205), ledit élément saillant (213) venant en butée contre une partie arrière finale de ladite rainure (17) dudit élément de guidage (7), ladite dent (205) venant en butée à l'intérieur dudit creux (204).

2. Dispositif selon la revendication 1, **caractérisé en ce que**: ledit moyen de blocage (205, 207) peut se mettre en prise par action d'encliquetage en faisant glisser ledit composant électrique (206) par rapport audit cadre (30), ledit moyen de blocage pouvant être mis hors de prise en agissant sur ledit élément de mise en prise flexible (207).
